Europäisches Patentamt

(19) European Patent Office

Office européen des brevets

(11) Numéro de publication : **0 029 374**
**B1**

(12) **FASCICULE DE BREVET EUROPÉEN**

(45) Date de publication du fascicule du brevet :
14.09.83

(51) Int. Cl.³ : **F 02 P 5/04**

(21) Numéro de dépôt : **80401499.1**

(22) Date de dépôt : **22.10.80**

(54) **Générateur de signal de correction d'angle d'avance à l'allumage sous l'action de cliquetis.**

(30) Priorité : 09.11.79 FR 7927683

(43) Date de publication de la demande :
27.05.81 Bulletin 81/21

(45) Mention de la délivrance du brevet :
14.09.83 Bulletin 83/37

(84) Etats contractants désignés :
**DE GB IT SE**

(56) Documents cités :
FR A 2 337 261
FR A 2 398 895
FR A 2 429 904
GB A 2 030 644
US A 4 002 155

(73) Titulaire : **REGIE NATIONALE DES USINES RENAULT**
**Boîte postale 103 8-10 avenue Emile Zola**
**F-92109 Boulogne-Billancourt (FR)**

(72) Inventeur : **Deleris, Robert**
**36, Square des Marronniers**
**F-78870 Bailly (FR)**

(74) Mandataire : **Jacques, Max et al**
**RNUR - S. 0804 BP 103**
**F-92109 Boulogne Billancourt (FR)**

Jouve, 18, rue St-Denis, 75001 Paris, France

Générateur de signal de correction d'angle d'avance à l'allumage sous l'action de cliquetis

La présente invention due à la collaboration de M. R. DELERIS est relative à un générateur de signal de correction d'angle d'avance à l'allumage sous l'action de signaux de cliquetis dans un moteur thermique à combustion interne et à allumage commandé.

Au cours de la mise au point d'un nouveau moteur à essence, la prise en compte du phénomène de cliquetis est devenue une phase habituelle du travail du motoriste. Des expériences précises lui permettent de choisir un taux de compression qui donne un bon compromis entre les paramètres suivants : absence de cliquetis, valeur de couple spécifique, rendement, choix du carburant, compte tenu de la précision des dispositifs d'avance à l'allumage dont il dispose. Avec les dispositifs d'allumage à génération de loi d'avance à partir de pièces mécaniques en mouvement, le motoriste prévoit une loi d'avance passant au maximum de couple spécifique et/ou avec une garde au cliquetis de l'ordre de huit degrés volant. Cette limite peut devenir pénalisante sur des moteurs où la limite de cliquetis est proche ou en avant de l'avance optimale.

Divers essais ont montré que l'on peut diminuer cette garde moyennant l'adjonction de dispositifs de décalage simples tels que la commutation, en fonction de la température de l'eau du moteur ou de l'air dans le collecteur d'admission, de moyens donnant l'instant d'allumage, par exemple en commutant les signaux délivrés par un allumeur à deux capteurs électromagnétiques ou à effet Hall décalés pour donner une translation du réseau d'avance à l'allumage. Néanmoins, ces dispositifs, pouvant se montrer satisfaisants pour certains points de fonctionnement, désadaptent la loi d'avance à l'allumage et ne permettent pas d'avoir un point d'allumage au moment optimal pour le moteur. Il convient donc de ne provoquer de décalages que lorsqu'ils sont nécessaires et en vue de faire travailler le moteur dans des conditions optimales. Actuellement, le technicien peut concevoir ou utiliser des allumages électroniques à cartographie d'avance préprogrammée en fonction des différentes valeurs de vitesse de rotation du moteur et/ou de la dépression dans le collecteur d'admission et ainsi prévoir une loi d'avance se rapprochant des valeurs de rendement optimal pour le moteur. Il lui sera facile d'adopter le dispositif décrit ci-après pour décaler le point d'allumage de façon à ne pas provoquer de cliquetis.

La méthode la plus efficace de détection de cliquetis est l'analyse des pressions dans la chambre de combustion du moteur. Cette méthode nécessite des capteurs chers. On lui préfère l'analyse des vibrations de la culasse du moteur au moyen de capteurs de vibrations, par exemple du type sismique, comme décrit dans les brevets US-A-4002155 et FR-A-2 398 895. L'analyse des vibrations tant en fréquence qu'en amplitude au cours d'un demi-tour montre différentes phases d'excitation, notamment le bruit dû à la combustion et celui de l'actionnement des soupapes à l'admission et à l'échappement. La phase de combustion commençant dès l'instant d'allumage ne présente de points caractéristiques de signaux de cliquetis qu'au voisinage de la pression maximale du moteur ; il convient donc d'examiner le signal du capteur de vibration de part et d'autre de cette phase de maximum de pression.

Habituellement, on engendre une fenêtre angulaire liée en rotation au vilebrequin et permettant de n'enregistrer les signaux relatifs au bruit de combustion qu'au moment de cette phase. Le bruit de combustion est fonction de la vitesse de rotation, de l'angle d'avance à l'allumage, de la dépression dans le collecteur d'admission, du type de carburant utilisé. Une intégration de ce bruit dans la fenêtre angulaire est un élément clé bien connu du technicien appelé à traiter de ces sujets et permet d'augmenter la dynamique du signal. Le bruit croît avec le régime moteur ; le fait d'intégrer ce bruit pendant un temps variable, inverse du régime moteur, diminue les interactions dues aux variations de niveau provoquées par une variation de vitesse. Néanmoins, cette solution n'est suffisante que pour des régimes moteurs peu élevés ; ensuite, la valeur intégrée croît avec le régime moteur ; il est donc nécessaire de travailler en niveau relatif et ceci en individualisant les valeurs données pour chaque cylindre.

On trouvera une description d'un système de détection de cliquetis basé sur ce principe dans la demande de brevet EP-A-18858 à laquelle le lecteur est prié de se reporter.

Dans la demande de brevet EP-A-18 858, on a revendiqué suivant un premier aspect un procédé de calcul et de réglage de l'optimisation de l'avance à l'allumage d'un moteur à combustion interne au moyen d'un système de détection du cliquetis à l'aide d'un capteur tel qu'un accéléromètre rigidement fixé sur la culasse du moteur, caractérisé en ce que l'on fait subir un traitement analogique au signal accélérométrique comportant notamment l'intégration du signal à l'intérieur d'une fenêtre déterminée ; on convertit le signal résultant sous forme numérique ; on calcule une valeur moyenne $\bar{c}$ proportionnelle aux $n$ coups de cliquetis précédents ; on calcule deux seuils de comparaison $S_1$ et $S_2$ qui sont chacun une fonction linéaire de la valeur moyenne $\bar{c}$ calculée précédemment ; on compare la valeur accélérométrique intégrée sous forme numérique à chacun de ces seuils et l'on en déduit l'existence ou l'absence d'une valeur de précliquetis et/ou de cliquetis audible que l'on utilise ensuite pour agir sur l'avance programmée de l'allumage électronique.

Suivant un second aspect, on a décrit et revendiqué un système de calcul et de réglage de l'optimisation de l'avance à l'allumage d'un moteur à combustion interne au moyen d'un système de détection du cliquetis à partir d'un capteur tel qu'un accéléromètre rigidement fixé sur la culasse du moteur, caractérisé en ce qu'il comprend les moyens de traitement analogiques du signal prélevé sur l'accéléromètre, ces moyens comportant notamment un intégrateur des moyens logiques de commande de l'intégrateur, un convertisseur analogique-numérique et un microcalculateur comportant notamment un séquenceur, un étage de calcul d'une valeur moyenne $\bar{c}$ proportionnelle aux $n$ coups de cliquetis précédents, deux étages de calcul de seuils de comparaison $S_1$, $S_2$ qui sont chacun une fonction linéaire de la valeur moyenne $\bar{c}$ calculée précédemment et des moyens pour en déduire l'existence ou l'absence d'une valeur de précliquetis et/ou de cliquetis audible.

La demande de brevet européen sus-mentionnée permet donc de mettre en évidence deux seuils de détection, l'un appelé seuil de précliquetis et l'autre seuil de cliquetis détectant des niveaux de valeur intégrée supérieurs à ceux du seuil de précliquetis.

Supposant ces signaux préalables mis en évidence et disponibles, la présente invention propose un système de correction de l'angle d'avance capable d'exploiter les signaux de précliquetis et de cliquetis qui ont été mis en évidence à l'aide du système de calcul et de réglage d'optimalisation décrit dans la demande de brevet européen sus-mentionnée.

A cet effet, l'invention a pour objet un générateur de signal de correction de l'angle d'avance à l'allumage sous l'action de signaux de cliquetis pour un moteur thermique à combustion interne et à allumage commandé, du type comportant des moyens de mise en évidence de deux seuils de détection fournissant des signaux de précliquetis et de cliquetis et ce, pour chaque cylindre du moteur pris successivement dans un ordre prédéterminé, caractérisé en ce qu'à partir des signaux de précliquetis et de cliquetis apparaissant respectivement sur un conducteur d'entrée prédéterminé, il comprend un premier multiplexeur recevant lesdits signaux de précliquetis et de cliquetis, connecté également par une troisième entrée à un compteur de cylindres recevant un signal de détrompage sur son entrée de remise à zéro et des tops de P.M.H. et de P.M.B. par sa seconde entrée, en ce que ledit premier multiplexeur comprend autant de paires de sorties que le moteur comprend de cylindres et en ce que chaque paire de sorties du multiplexeur est connectée à un calculateur de la valeur de décalage en fonction de l'état du compteur du cylindre considéré, le calculateur de valeur de décalage recevant un signal de top de P.M.H. et de P.M.B. et comprenant une première partie relative au traitement du signal de précliquetis et une seconde partie relative au traitement du signal de cliquetis, ces deux parties étant identiques entre elles et comprenant chacune : un registre de la valeur de décalage relative au cylindre considéré ; un décompteur numérique ;

un détecteur d'état et un diviseur programmable, ces deux parties étant reliées entre elles par leur détecteur d'état à un additionneur commun relié lui-même par sa sortie à un étage de sortie, le décompteur numérique de la seconde partie étant relié par son entrée de chargement au signal de seuil de précliquetis et le décompteur numérique de la première partie étant relié à la sortie d'une porte logique ET recevant sur une première entrée le signal de précliquetis, et sur une seconde entrée le signal de cliquetis par l'intermédiaire d'un inverseur logique et, dans chaque partie, le décompteur numérique étant relié par son entrée de déchargement au diviseur programmable correspondant par l'intermédiaire d'une porte logique connectée par sa seconde entrée au détecteur d'état correspondant.

D'autres caractéristiques ressortiront de la description qui suit et qui n'est donnée qu'à titre d'exemple. A cet effet, on se reportera aux dessins joints dans lesquels :

la figure 1   représente un schéma bloc d'un mode de réalisation du générateur de signal de correction suivant l'invention,

la figure 2   représente une variante de réalisation portant sur l'étage de sortie,

la figure 3   représente un mode de réalisation plus détaillé du calculateur de décalage existant en liaison avec chaque cylindre du véhicule et d'un étage de sortie, et,

la figure 4   représente un chronogramme des différents signaux présents dans le calculateur de décalage.

Les mêmes références désignent les mêmes éléments sur les différentes figures.

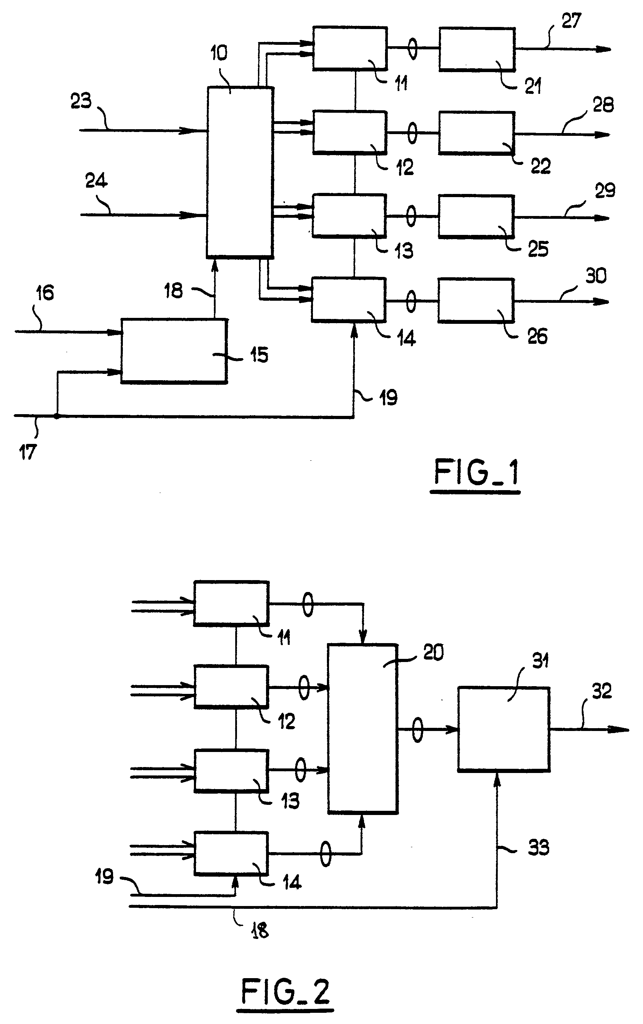

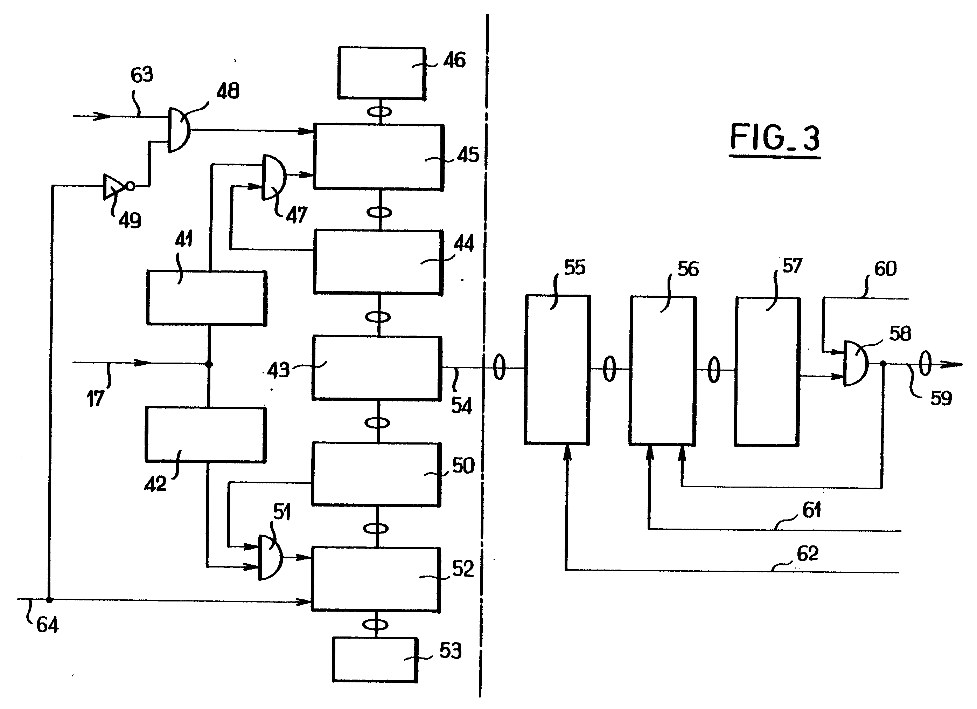

Suivant la figure 1, les informations délivrées par un détecteur de cliquetis, tel que par exemple celui décrit dans la demande de brevet EP-A-18 858 précédemment citée, apparaissent sur une entrée 23 en ce qui concerne le signal de précliquetis et sur une entrée 24 en ce qui concerne le signal de cliquetis pour un multiplexeur 10. Ce multiplexeur 10 dont le rôle est d'aiguiller les signaux des entrées 23 et 24 sur chacun des calculateurs élémentaires 11 à 14 comporte deux fois plus de sorties que le nombre de cylindres du moteur thermique. Les calculateurs élémentaires de décalage 11 à 14 sont reliés respectivement à des étages de sortie 21, 22, 25, 26 dont le rôle est de transmettre, par l'intermédiaire des sorties 27 à 30, la valeur de décalage d'avance au calculateur général d'avance à l'allumage associé au générateur de signal de correction suivant la présente invention. Un compteur de cylindres 15 reçoit sur son entrée 16 de remise à zéro un signal de détrompage délivré par exemple à la suite d'une détection de courant d'étincelle dans une bougie ou d'une détection d'un repère sur l'arbre à cames comme il est bien connu du technicien. Ce signal est un signal de resynchronisation. Le compteur de cylindres 15 reçoit en outre par sa seconde entrée 17 des signaux de détection de tops correspondant au point mort haut (P.M.H.) et au point mort bas (P.M.B.). L'entrée 17 est l'entrée d'horloge pour le compteur de cylindres 15. Les signaux de tops de P.M.H. et de P.M.B. sont également reçus par les calculateurs de valeur de décalage de chaque cylindre 11 à 14 par un conducteur 19. Le compteur de cylindres 15 est connecté par sa sortie 18 comme entrée de contrôle sur le multiplexeur 10. Les calculateurs de valeur de décalage 11 à 14 sont tous du même type et délivrent sur leur sortie une valeur d'angle de décalage pour le cylindre correspondant qui est établie à partir de l'activation des entrées précliquetis 23 et/ou cliquetis 24 et du nombre d'allumages. On précisera ultérieurement à l'aide de la figure 3 comment sont réalisés lesdits calculateurs.

La figure 2 illustre une variante de réalisation du générateur de signal de correction de la figure 1 par le fait que les sorties des calculateurs de valeur de décalage 11 à 14 pour chaque cylindre sont connectées à un multiplexeur de sortie 20 relié par sa sortie à un unique étage de sortie 31 recevant par son entrée 33 les signaux d'aiguillage 18 présents à la sortie du compteur de cylindres 15. La sortie 32 de l'étage de sortie 31 est reliée au calculateur d'avance à l'allumage qui utilise les informations de ladite ligne 32 dans un ordre prédéterminé, ce qui est parfaitement concevable puisqu'il s'agit d'un système séquentiel.

La figure 3 illustre un mode de réalisation détaillé de chacun des calculateurs 11 à 14 apparaissant sur les figures précédentes ainsi que de chacun des étages de sortie 21, 22, 25, 26 et 31 des figures précédentes. A la partie gauche de la figure 3, on reconnaît les conducteurs 63, 64 qui sont les sorties respectives qui correspondent aux conducteurs 23 et 24 au travers du multiplexeur 10 et le conducteur 17 déjà introduits à la figure 1 et qui fournissent en entrée respectivement les signaux de précliquetis, de cliquetis et de tops de P.M.H. et de P.M.B. Le conducteur 17 de tops de P.M.H. et de P.M.B. aboutit comme entrée en parallèle sur deux diviseurs programmables 41 et 42 affectés respectivement au précliquetis et au cliquetis.

D'une manière générale, l'architecture du calculateur est symétrique et comporte deux parties identiques affectées respectivement au traitement du précliquetis et du cliquetis et qui se terminent toutes deux en entrées sur un additionneur commun 43. La partie du calculateur affectée au traitement du signal de précliquetis parvenant par le conducteur d'entrée 63 comprend un registre 46 d'emmagasinage de valeur de décalage raccordé à un décompteur numérique 45 relié lui-même à l'additionneur de sortie 43 par l'intermédiaire d'un détecteur d'état 44. Le détecteur d'état 44 est en outre relié au décompteur numérique 45 par l'intermédiaire d'une première porte logique 47 à fonction ET dont la seconde entrée est reliée à la sortie du diviseur programmable 41. L'entrée de chargement du décompteur numérique 45 est connectée à la sortie d'une seconde porte logique 48 à fonction ET connectée par une première entrée au conducteur 63 de signal de précliquetis et par une seconde entrée au conducteur 64 de signal de cliquetis par l'intermédiaire d'un inverseur logique 49.

D'une façon analogue, la partie du calculateur affectée au traitement du signal de cliquetis introduit à l'entrée 64 comprend un registre 53 d'emmagasinage de la valeur de décalage pour le cylindre considéré, qui est raccordé à un décompteur numérique 52 relié lui-même à l'additionneur de sortie 43 par l'intermédiaire d'un détecteur d'état 50. Le détecteur d'état 50 est en outre relié au décompteur numérique 52 par l'intermédiaire d'une troisième porte logique 51 à fonction ET dont la seconde entrée est reliée à la sortie du diviseur programmable 42.

L'entrée de chargement du décompteur numérique 52 est directement connectée à l'entrée 64 fournissant les signaux de cliquetis.

La sortie 54 de l'additionneur 43 est reliée à un étage de sortie constitué par la connexion en série d'une mémoire 55, d'un décompteur numérique 56, d'un détecteur d'état 57 dont la sortie est reliée à une entrée d'une quatrième porte logique 58 à fonction ET ayant une sortie 59. La porte ET 58 est connectée par sa seconde entrée à un conducteur 60 véhiculant les signaux d'horloge de cadencement, le conducteur 59 est relié également à l'entrée de décomptage du décompteur numérique 56. Un conducteur 61 est relié à l'entrée « chargement » du décompteur numérique 56 et un conducteur 62 est relié à une entrée de la mémoire 55 pour déclencher le fonctionnement de cette dernière.

Le calculateur illustré à la figure 3 comprend donc deux décompteurs numériques programmables 45 et 52 qui sont rechargés à l'état $m$ par les impulsions de précliquetis 63 et de cliquetis 64 et qui sont reliés à un additionneur commun 43. Les décompteurs 45 et 52 sont déchargés par l'intermédiaire des diviseurs programmables 41 et 42 toutes les $n$ impulsions P.M.H. ou P.M.B. Les valeurs $m$ relatives aux deux décompteurs peuvent être différentes ; elles dépendent de la stratégie de régulation de la valeur de l'avance. La valeur de $m$ relative à la partie précliquetis 63 est faible, comprise entre un et quatre, et conditionne la régulation tandis que la valeur de $m$ relative à la partie cliquetis 64 est relativement importante, comprise entre six et dix, et conditionne la protection du moteur contre les coups de cliquetis sévères. De même, les valeurs de $n$ issues des diviseurs programmables 41 et 42 et introduites dans les décompteurs numériques 45, 52 sont généralement différentes et conditionnent la régulation : la valeur de $n$ relative à la partie précliquetis 63 est élevée, comprise entre 1 000 et 2 000 signaux de tops de P.M.H. et de P.M.B., provoquant un retour lent aux conditions normales programmées ; la valeur de $n$ relative à la partie cliquetis 64 est faible, comprise entre 200 et 400 signaux de tops de P.M.H. et de P.M.B., provoquant un retour rapide pour ne pas trop pénaliser le moteur sur des coups forts de cliquetis détectés dans les phases transitoires telles que lors d'accélérations ou de changement de vitesse.

L'additionneur 43 fait la somme algébrique des valeurs des deux décalages. Il est relié à l'étage de sortie par le conducteur 54. L'étage de sortie 55-62 est un étage de transformation parallèle/série. Il se peut que, suivant la technologie du calculateur recevant le dispositif, cet étage devienne inutile. Dans ce dernier cas, l'étage de sortie se réduit au bloc mémoire 55. Le mode de réalisation illustré à la figure 3 s'applique au cas de la figure 2 à condition d'interposer le multiplexeur de sortie 20 sur le conducteur 54 entre l'additionneur 43 et la mémoire 55.

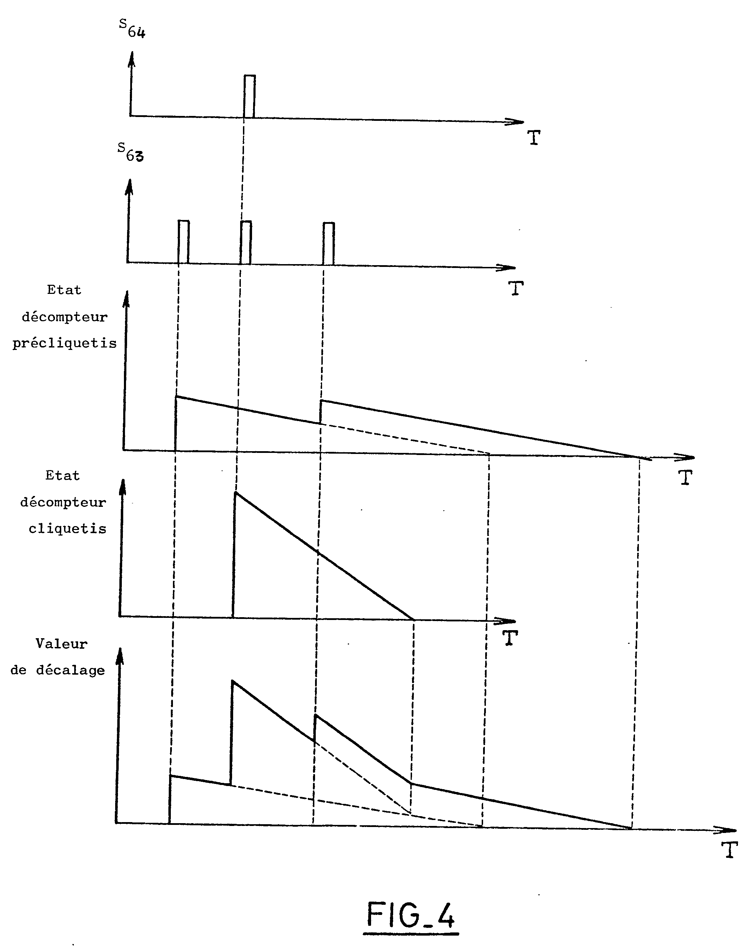

La figure 4 représente en fonction du temps un chronogramme des différents signaux présents dans le calculateur de valeur de décalage illustré à la figure 3, à savoir les états de sortie S 64, S 63 du détecteur de cliquetis sur les deux premières lignes correspondant aux entrées respectives 64 et 63 et l'état des deux décompteurs 45, 52 sur les deux lignes suivantes. Ces deux décompteurs sont rechargés à la valeur programmée dans le registre associé respectivement 46 et 53 à chaque impulsion du détecteur de cliquetis. La dernière ligne à la figure 4 représente l'état de l'additionneur 43, c'est-à-dire la forme du signal correspondant à la valeur du décalage qui est transmise sur le conducteur 54 vers le calculateur d'avance à l'allumage.

**Revendications**

1. Générateur de signal de correction de l'angle d'avance à l'allumage sous l'action de signaux de cliquetis pour un moteur thermique à combustion interne et à allumage commandé, du type comportant des moyens de mise en évidence de deux seuils de détection fournissant des signaux de précliquetis et de cliquetis et ce, pour chaque cylindre du moteur pris successivement dans un ordre prédéterminé, caractérisé en ce qu'à partir des signaux de précliquetis et de cliquetis apparaissant respectivement sur un conducteur d'entrée prédéterminé (23, 24), il comprend un premier multiplexeur (10) recevant lesdits signaux de précliquetis et de cliquetis, connecté également par une troisième entrée (18) à un compteur de cylindres (15) recevant un signal de détrompage sur son entrée (16) de remise à zéro et des tops de P.M.H. et de P.M.B. par sa seconde entrée (17), en ce que ledit premier multiplexeur (10) comprend autant de paires de sorties (27, 30) que le moteur comprend de cylindres et en ce que chaque paire de sorties du multiplexeur est connectée à un calculateur (11 à 14) de la valeur de décalage en fonction de l'état du compteur du cylindre considéré, le calculateur de valeur de décalage (11 à 14) recevant un signal de top de P.M.H. et de P.M.B. (19) et comprenant une première partie (41, 44 à 48) relative au traitement du signal de précliquetis (63) et une seconde partie (42, 50 à 53) relative au traitement du signal de cliquetis (64), ces deux parties étant identiques entre elles et comprenant chacune : un registre (46, 53) de la valeur de décalage relative au cylindre considéré ; un décompteur numérique (45, 52) ; un détecteur d'état (44, 50) et un diviseur programmable (41, 42), ces deux parties étant reliées entre elles par leur détecteur d'état (44, 50) à un additionneur commun (43) relié lui-même par sa sortie (54) à un étage de sortie (55 à 62), le décompteur numérique (52) de la seconde partie étant relié par son entrée de chargement au signal de seuil de précliquetis (63) et le décompteur numérique (45) de la première partie étant relié à la sortie d'une porte logique ET (48) recevant sur une première entrée le signal de précliquetis, et sur une seconde entrée le signal de cliquetis par l'intermédiaire d'un inverseur logique (49) et, dans chaque partie, le décompteur numérique (45, 52) étant relié par son entrée de déchargement au diviseur programmable (41, 42) correspondant par l'intermédiaire d'une porte logique (47, 51) connectée par sa seconde entrée au détecteur d'état (44, 50) correspondant.

2. Générateur de signal de correction suivant la revendication 1, caractérisé en ce que les différents calculateurs (11 à 14) de valeur de décalage relativement à un cylindre déterminé sont connectés par leurs sorties aux différentes entrées d'un second multiplexeur (20) connecté lui-même par sa sortie à un étage de sortie (31) recevant sur une seconde entrée (33) les signaux d'aiguillage (18) présents à la sortie du compteur de cylindres (15).

3. Générateur de signal de correction suivant la revendication 1, caractérisé en ce que chaque calculateur (11 à 14) de valeur de décalage relativement à un cylindre déterminé est suivi d'un étage de sortie (21 à 26).

4. Générateur de signal de correction suivant la revendication 2 ou 3, caractérisé en ce que chaque étage de sortie (21, 22, 25, 26, 31) est un étage de transformation parallèle/série.

5. Générateur de signal de correction suivant la revendication 3, caractérisé en ce que chaque étage de sortie (21, 22, 25, 26, 31) comporte la connexion en série d'une mémoire (55), d'un décompteur numérique (56) et d'un détecteur d'état (57) dont la sortie est reliée à une première entrée d'une troisième porte logique (58) à fonction ET dont la seconde entrée est reliée à un conducteur (60) véhiculant des signaux d'horloge et dont la sortie est reliée également à l'entrée de déchargement dudit décompteur numérique (56).

6. Générateur de signal de correction suivant la revendication 3, caractérisé en ce que chaque étage de sortie (21, 22, 25, 26) comporte une simple mémoire (55) pour chaque calculateur élémentaire (11 à 14).

7. Générateur de signal de correction suivant la revendication 2, caractérisé en ce que l'étage de sortie (31) comporte une simple mémoire (55).

**Claims**

1. A generator for generating a signal for correcting the ignition advance angle under the effect of knocking signals for a controlled-ignition internal combustion heat engine, of the type comprising means for representing two detection thresholds providing pre-knocking and knocking signals, in respect of each cylinder of the engine taken in succession in a predetermined order, characterised in that, taking pre-knocking and knocking signals which respectively appear on a predetermined input line (23, 24), it comprises a first multiplexer (10) for receiving said pre-knocking and knocking signals, which is also connected by a third input (18) to a cylinder counter (15) which receives a correcting signal at its zero resetting input (16) and TDC and BDC pips by means of its second input (17), that said first multiplexer (10) comprises as many pairs of outputs (27, 30) as the number of cylinders of the engine, and that each pair of outputs of the multiplexer is connected to a calculating means (11 to 14) for calculating the retard value in dependence on the state of the counter of the cylinder in question, the retard value calculating means (11 to 14) receiving a TDC and BDC pip signal (19) and comprising a first portion (41, 44 to 48) relating to processing of the pre-knocking signal (63) and a second portion (42, 50 to 53) relating to processing of the knocking signal (64), said two portions being identical to each other and each comprising : a register (46, 53) for the retard value relating to the cylinder in question ; a digital down counter (45, 52) ; a state detector (44, 50) and a programmable divider (41, 42), said two portions being connected together by their state detector (44, 50) to a common adder (43) which is itself connected by its output (54) to an output stage (55 to 62), the digital down counter (52) of the second portion being connected by its loading input to the pre-knocking threshold signal (63) and the digital down counter (45) of the first portion being connected to the output of a logic AND gate (48) which receives the pre-knocking signal on a first input and the knocking signal on a second input, by way of a logic inverter (49), and, in each portion, the numerical down counter (45, 52) being connected by its unloading input to the corresponding programmable divider (41, 42) by way of a logic gate (47, 51) connected by its second input to the corresponding state detector (44, 50).

2. A correction signal generator according to claim 1 characterised in that the various retard value calculating means (11 to 14) relating to a given cylinder are connected by their outputs to the various inputs of a second multiplexer (20) which is itself connected by its output to an output stage (31) receiving at a second input (33) the switching signals (18) present at the output of the cylinder counter (15).

3. A correction signal generator according to claim 1 characterised in that each retard value calculating means (11 to 14) relating to a given cylinder is followed by an output stage (21 to 26).

4. A correction signal generator according to claim 2 or claim 3 characterised in that each output stage (21, 22, 25, 26, 31) is a parallel/series transformation stage.

5. A correction signal generator according to claim 3 characterised in that each output stage (21, 22, 25, 26, 31) comprises the series connection of a memory (55), a digital down counter (56) and a state detector (57), the output of which is connected to a first input of a third logic AND gate (58), of which the second input is connected to a line (60) carrying clock signals, while the output is also connected to the unloading input of said digital down counter (56).

6. A correction signal generator according to claim 3 characterised in that each output stage (21, 22, 25, 26) comprises a simple memory (55) for each elementary calculating means (11 to 14).

7. A correction signal generator according to claim 2 characterised in that the output stage (31) comprises a simple memory (55).

**Ansprüche**

1. Signalgenerator zur Korrektur der Einstellung der Frühzündung in Abhängigkeit vom Klopfverhalten für eine Brennkraftmaschine mit Zündverstellung, der eine Anordnung zur Feststellung zweier Schwellwerte aufweist, welche Vorsignale und Klopfsignale erzeugt und zwar für jeden Zylinder in vorgegebener Reihenfolge, dadurch gekennzeichnet, daß er für die Vorsignale und die Klopfsignale die an einer entsprechenden vorbestimmten Eingangsleitung (23, 24) anstehen, einen ersten Multiplexer (10) aufweist, dem diese Vorsignale und Klopfsignale zugeführt werden, dessen dritter Eingang (18) mit einem Zylinderzähler (15) verbunden ist, dessem Null-Setzungseingang (16) ein Kontrollsignal zugeführt wird und dessem zweiten Eingang Impulse für oberen und unteren Totpunkt zugeführt werden, daß der erste Multiplexer (10) so viel Ausgangspaare (27, 30) aufweist, wie der Motor Zylinder enthält und daß jedes Ausgangspaar des Multiplexers mit einem Rechner (11 bis 14) für den Frühzündungswert als Funktion des infrage kommenden Zylinderzählers verbunden ist, wobei der Rechner (11-14) ein Impulssignal für den oberen und unteren Totpunkt (19) erhält und einen ersten Teil (41, 44 bis 48) aufweist zur Verarbeitung des Vorsignals (63) und einen zweiten Teil (62, 50 bis 53) aufweist zur Bearbeitung des Klopfsignals (64) und beide Teile untereinander identisch sind und jeweils folgende Teile aufweisen : ein Register (46, 53) für den Frühzündungswert des infrage kommenden Zylinders ; einen numerischen Aufwärtszähler (45, 52) ; einen Zustandszähler (44, 50) und einen programmierbaren Teiler (41, 42), wobei die beiden Teile untereinander über ihren Zustandszähler (44, 50) mit einem gemeinsamen Addierer (43) verbunden sind, der wiederum über seinen Ausgang (54) mit einer Ausgangsstufe (54 bis 62) verbunden ist, während der numerische Abwärtszähler des zweiten Teils über seinen Ladeeingang das Vorsignal (63) aufnimmt und der numerische Abwärtszähler (45) des ersten Teils über seinen Ausgang mit einer logischen UND-Schaltung (48) verbunden ist, deren erstem Eingang das Vorsignal und deren zweitem Eingang das Klopfsignal zugeführt wird mittels eines logischen Inverters (49), während in beiden Teilen der numerische Abwärtszähler (45, 52) über seinen Entladeeingang mit dem entsprechenden programmierbaren Teiler (41, 42) über eine logische Torschaltung verbunden ist, deren zweiter Eingang mit dem entsprechenden Zustandszähler (44, 50) verbunden ist.

2. Signalgenerator nach Anspruch 1, dadurch gekennzeichnet, daß die verschiedenen Rechner (11 bis 14) für den Frühzündungswert bezüglich eines bestimmten Zylinders über ihre Ausgänge mit verschiedenen Eingängen eines zweiten Multiplexers (20) verbunden sind, dessen Ausgang wiederum mit einer Ausgangsstufe (31) verbunden ist, deren zweiten Eingang (33) die am Ausgang des Zylinderzählers (15) anstehenden Signalspitzen (18) zugeführt werden.

3. Signalgenerator nach Anspruch 1, dadurch gekennzeichnet, daß jedem Rechner (11 bis 14) für den Frühzündungswert eines bestimmten Zylinders eine Ausgangsstufe (21 bis 26) nachgeschaltet ist.

4. Signalgenerator nach Anspruch 2 oder 3, dadurch gekennzeichnet, daß jede Ausgangsstufe (21, 22, 25, 26, 31) eine Parallel/Serien-Umformungsstufe ist.

5. Signalgenerator nach Anspruch 3, dadurch gekennzeichnet, daß jede Ausgangsstufe (21, 22, 25, 26, 31) die Reihenschaltung eines Speichers (55), eines numerischen Abwärtszählers (56) und eines Zustandszählers (57) aufweist, dessen Ausgang mit einem ersten Eingang einer dritten logischen UND-Torschaltung (58) verbunden ist, deren zweiter Eingang mit einem Leiter (60) verbunden ist zur Zufuhr von Uhrsignalen und deren Ausgang mit dem Entladeeingang des numerischen Abwärtszählers (56) verbunden ist.

6. Signalgenerator nach Anspruch 3, dadurch gekennzeichnet, daß jede Ausgangsstufe (21, 22, 25, 26) einen einfachen Speicher (55) für jeden einzelnen Rechner (11 bis 14) aufweist.

7. Signalgenerator nach Anspruch 2, dadurch gekennzeichnet, daß die Ausgangsstufe (31) einen einfachen Speicher (55) aufweist.

FIG_1

FIG_2

FIG_3

0 029 374

FIG_4